# EUROPÄISCHE PATENTANMELDUNG

(11) **EP 3 808 553 A1**
(43) Veröffentlichungstag der Anmeldung: **21.04.2021**
(21) Anmeldenummer: 20202280.2
(22) Anmeldetag: 16.10.2020
(51) Int. Cl.: B32B 3/06, B32B 3/08, B32B 5/02, B32B 7/027, B32B 7/05, B32B 9/00, B32B 13/02, B32B 13/14, B32B 21/02, B32B 21/10, E04B 1/76, E04C 2/284, E04F 13/00, E04F 13/08, E04F 13/10, E04F 13/12

(54) **FASSADENELEMENTE UND VERFAHREN ZUR ENERGETISCHEN SANIERUNG VON GEBÄUDEN**

(30) Priorität: 17.10.2019 DE 102019128118
(71) Anmelder: SAINT-GOBAIN ISOVER G+H AG, 67059 Ludwigshafen (DE); Saint-Gobain Weber GmbH, 40549 Düsseldorf (DE); Matzig, Roland, 68199 Mannheim (DE); Elsässer, Matthias, 68259 Mannheim (DE)
(72) Erfinder: MATZIG, Roland, 68199 Mannheim (DE); ELLÄSSER, Matthias, 68259 Mannheim (DE); MARNER, Tobias, 53844 Troisdorf (DE); NICKEL, Evamaria, 52146 Würselen (DE); HÖRNER, Alfred, 77694 Kehl (DE); KESSEL, Fritz, 52393 Hürtgenwald (DE); REISCH, Bruno, 76530 Baden-Baden (DE); LANGKAU, Michael, 68535 Edingen-Neckarhausen (DE)
(74) Vertreter: Bockhorni & Brüntjen Partnerschaft Patentanwälte mbB

(57) **Zusammenfassung**

Die Erfindung betrifft ein Fassadenelement mit zumindest einer Dämmschicht (12), einer ersten Anbindungsschicht (14) und einer zweiten Anbindungsschicht (16), wobei die erste und die zweite Anbindungsschicht (14, 16) beabstandet voneinander angeordnet sind und die Dämmschicht (12) zwischen der ersten und der zweiten Anbindungsschicht (14, 16) angeordnet ist, wobei die erste Anbindungsschicht (14) zumindest ein erstes Dämmelement (26) umfasst, das elastische Eigenschaften derart aufweist, dass es geeignet ist, Unebenheiten einer Bestandsfassade (40) zu nivellieren, wobei die erste Anbindungsschicht (14) zumindest einen ersten Verbinder (18) zur Anbindung an die Bestandsfassade (40) umfasst, und wobei die Dämmschicht (12) zumindest ein zweites Dämmelement (28) umfasst, das in einem insbesondere aus einem Metall- oder Holzprodukt gefertigten Rahmenelement (36) aufgenommen ist.

Des Weiteren betrifft die Erfindung ein Verfahren zur Herstellung eines derartigen Fassadenelements sowie ein Verfahren zur energetischen Sanierung von Gebäuden und einen Bausatz zur energetischen Sanierung von Gebäuden.

## Beschreibung

Die Erfindung betrifft ein Fassadenelement, ein Verfahren zur Herstellung eines Fassadenelements, ein Verfahren zur energetischen Sanierung von Gebäuden und einen Bausatz zur energetischen Sanierung von Gebäuden.

### HINTERGRUND DER ERFINDUNG

Bei der energetischen Sanierung von Bestandsbauten steht die Minimierung des Energieverbrauchs des Gebäudes im Vordergrund. Um den Heizwärmebedarf zu minimieren, spielt die Außenwanddämmung eine entscheidende Rolle.

Eine bestehende, zu sanierende Wand eines Gebäudes wird im Folgenden als "Bestandsfassade" bezeichnet. Die Bestandsfassade bildet die Außenwand des Gebäudes, zumeist eine mittels einer Oberflächenbekleidung oder -beschichtung ästhetisch gestaltete Außenwand.

Zur Wärmedämmung einer Bestandsfassade werden bisher zumeist sogenannte Wärmdämmverbundsysteme (WDVS) verwendet. Ein WDVS besteht aus einer an der Bestandsfassade angeordneten Dämmschicht aus einzelnen Dämmelementen, beispielweise aus gebundenen Mineralfasern, die an die Bestandsfassade geklebt, gedübelt oder sowohl geklebt als auch gedübelt ist. Außenseitig sind üblicherweise mehrere Putzschichten als Beschichtung vorgesehen.

Ein WDVS ist beispielsweise aus WO 2005/035894 A1 bekannt. Das WDVS umfasst eine Fassadendämmplatte aus Mineralfasern hoher Qualität. Zur Anbringung des WDVS an der Bestandsfassade wird zunächst eine Putzträger-Fassadendämmplatte mit Kleber versehen, an die Bestandsfassade geklebt und mit Dübeln an dieser zusätzlich gesichert. Auf die Außenfläche der Fassadendämmplatte werden eine oder mehrere üblicherweise armierte Putzschichten aufgebracht. Das Gewicht der Putzschicht und die hierauf einwirkenden Kräfte werden von den Fasern der Fassadendämmplatte gehalten, wobei die Fassadendämmplatten wiederum gegen die Massivwand durch die Dübel gehalten sind. Nachteilig ist, dass die Montage von WDVS vollständig an der Baustelle erfolgt. Auch eine Integration einer Wohnraumbelüftung in Form einer in die Dämmschicht integrierten Kanalführung ist bei dem WDVS nicht möglich.

Aus WO 2012/104067 A1 ist ein Isoliersystem zum Abdecken einer Fassade eines Gebäudes bekannt, das zwei Mineralwolleschichten mit unterschiedlicher Rohdichte nebeneinander vorsieht, wobei eine dem Bestandsbauwerk zugewandte Schicht als eine Schicht mit geringer Rohdichte ausgebildet ist, so dass diese Schicht Unebenheiten der Oberfläche der Bestandsbauten aufnehmen kann. Das System wird an der Bestandsfassade mittels üblicher Dübel befestigt. Das Isoliersystem kann eine dritte außenseitige Isolierschicht einer solchen Rohdichte aufweisen, dass die Dübelteller bündig mit dieser Schicht abschließen. Nachteilig an diesem System ist, dass es einen sehr niedrigen Vorfertigungsgrad aufweist.

WO 2015/164987 offenbart eine schichtweise an einer Bestandsfassade zu befestigende Konstruktion mit einer ersten Schicht aus ersten Wärmedämmungselementen mit einer ersten Dichte, welche an einer Außenwand eines Gebäudes angeordnet werden, einer zweiten Schicht mit zweiten Wärmedämmungselementen mit einer zweiten Dichte, welche auf der ersten Schicht anzuordnen ist, einer Haltevorrichtung, welche die beiden Schichten an der Außenwand des Gebäudes hält, und einer äußeren Schutzschicht als Schutz vor Nässe und mechanischer Belastung. Des Weiteren befindet sich zwischen den Wärmedämmungselementen eine Zwischenlage in Gestalt von Montageplatten. Nachteilig an diesem System ist, dass es ebenfalls einen sehr niedrigen Vorfertigungsgrad aufweist.

EP 3130721 A1 zeigt ein mehrschichtiges Bauelement zur Renovierung von Gebäuden mit einer zwischen einem äußeren und einem inneren Oberflächenpaneel sandwichartig angeordneten Mineralwollelage mit integrierten Lüftungskanälen. Die Oberflächenpaneele bestehen aus plastikbeschichteten Metallbögen. Die Bauelemente weisen an einer Längsseite eine Längsnut und an einer gegenüberliegenden Längsseite eine Zunge auf, welche zur Ausbildung eines Formschlusses komplementär zueinander ausgebildet sind. Nachteilig ist, dass die Bauelemente nicht leicht rückbaubar sind und dass die Oberflächenpaneele nicht für einen Putzauftrag oder eine andere Bekleidung vorgesehen ist, sodass an der Außenseite des Bauelements wenig Gestaltungsfreiheit besteht.

Zur energetischen Sanierung von Gebäuden werden weiterhin vorgehängte hinterlüftete Fassaden verwendet, welche eine mehrschalige Außenwandkonstruktion ermöglichen, die die Frischluftzufuhr zwischen dem Außenmauerwerk und der Fassade erlaubt. So können Witterungsfeuchte und Kondenswasser hinter der Bekleidung entweichen, Regen und Nässe werden jedoch ausreichend abgehalten. Ein beständiger Luftstrom kann die Konstruktion jederzeit trocknen. Nach DIN 18516-1 /2010-06 umfasst diese Konstruktion eine Fassadenbekleidung, eine Hinterlüftungszone, eine Dämmung und eine Untergrundkonstruktion. Die vorgehängte hinterlüftete Fassade wird statisch vollständig von der Bestandsfassade getragen. Die Montage der vorgehängten hinterlüfteten Fassade umfasst in einem ersten Schritt das Anbringen von Ankerelementen an dem Bestandsbauwerk, in einem zweiten Schritt das Anbringen der Dämmung und der Tragprofile und in einem dritten Schritt das Anbringen der Fassadenbekleidung.

Nachteilig bei den vorbeschriebenen Systemen ist, dass die Montage bzw. das Anbringen des Systems jeweils zum größten Teil an der Baustelle erfolgt, was zeitaufwendig ist und lange andauernde Unannehmlichkeiten für die Bewohner während der energetischen Sanierung mit sich bringt. Entweder werden die Bewohner in der Zwischenzeit anderswo untergebracht, oder sie müssen mit den Beeinträchtigungen üblicherweise über einen Zeitraum von mehreren Monate leben. Zu diesen Beeinträchtigungen gehören neben dem optischen Baustellenzustand selber auch Schmutz, Lärm und vor allem die durch Gerüste dauerhaften Eingriffe in die Privatsphäre und das Sicherheitsbedürfnis der Bewohner. Die Anbringung des Systems erfordert außerdem eine nicht geringe Anzahl an Facharbeitern an der Baustelle, was eine weitere Einschränkung darstellt. So ist die Bauzeit der energetischen Sanierung eines Gebäudes stark von der Anzahl der verfügbaren Arbeitskräfte auf dem Bau abhängig. Weiterhin muss in der Regel während der gesamten Montagezeit ein Gerüst aufgestellt werden. Abhängig von der Gebäudegröße, ggf. lokalen Platzgegebenheiten und der Montagezeit können hier schnell Kosten in Höhe von mehreren Tausend bis Zehntausenden von Euro anfallen.

Ausgehend hiervon besteht die erfindungsgemäße Aufgabe darin, ein Fassadenelement mit einem hohen Vorfertigungsgrad unter Einhaltung der Energiestandards bereitzustellen. Zweckmäßig soll das Fassadenelement einfach aufgebaut sein, eine Montage ohne Stellung eines Gerüsts und eine leichte Rückbaubarkeit ermöglichen.

### BESCHREIBUNG DER ERFINDUNG

Bei einem erfindungsgemäßen Fassadenelement ist zumindest eine Dämmschicht, eine erste Anbindungsschicht und eine zweite Anbindungsschicht vorgesehen, wobei die erste und die zweite Anbindungsschicht beabstandet voneinander angeordnet sind und die Dämmschicht zwischen der ersten und der zweiten Anbindungsschicht angeordnet ist. Die erste Anbindungsschicht umfasst zumindest ein erstes Dämmelement und zumindest einen ersten Verbinder zur Anbindung an eine Bestandsfassade. Des Weiteren ist vorgesehen, dass die Dämmschicht zumindest ein zweites Dämmelement umfasst, das in einem insbesondere aus einem Metall- oder Holzprodukt gefertigten Rahmenelement aufgenommen ist.

Die Einbettung des zweiten Dämmelements in einem Rahmenelement und im Sandwich zwischen den Anbindungsschichten bildet einen hohen Vorfertigungsgrad, der es ermöglicht, die Anzahl der auf der Baustelle auszuführenden Tätigkeiten auf ein Minimum zu reduzieren. Vorteilhaft wird mit der Erfindung eine Lösung mit einem hohen, wenn nicht sogar optimalen Vorfertigungsgrad von über 90% bereitgestellt, welcher einen schnellen Baufortschritt und somit wenig Unannehmlichkeiten für die Bewohner und durch entfallende Umzugskosten auch eine Reduzierung der Gesamtkosten ermöglicht.

Der hohe Vorfertigungsgrad bedeutet darüber hinaus auch eine Absicherung der Bauqualität, da die Produkteigenschaften des unter definierten Bedingungen und geschultem Personal vorgefertigten Fassadenelements sich durch die wenigen verbleibenden Handgriffe auf der Baustelle nicht wesentlich verändern können. Auch eine witterungsbedingte Produktbeeinflussung entfällt im Wesentlichen.

Das erfindungsgemäße Fassadenelement ist gut handhabbar. So kann es aufgrund seiner durch das Rahmenelement verliehenen inhärenten Stabilität im Prinzip von einer einzigen Person bzw. von wenigen Personen an der Bestandsfassade angebracht werden, was somit einen schnellen Baufortschritt ermöglicht und die Rückbaubarkeit erleichtert.

Des Weiteren ermöglicht das Fassadenelement eine Montage oder Demontage ohne Stellung eines Gerüsts, es kann vielmehr mit einem Kran und einer mobilen Arbeitsbühne montiert werden. Dadurch reduzieren sich die Nebenkosten der Montage bzw. der Demontage erheblich.

Weiterhin ist es möglich, das zweite Dämmelement vollständig zwischen harten Schalen als vorgefertigtes Fassadenelement zu verkapseln, was eine große Auswahl an möglichen Dämmstoffen für das zweite Dämmelement erlaubt. Das zweite Dämmelement kann zum Beispiel Mineralwolle enthalten, ungebundene oder gebundene Dämmstoffe auf Basis von Naturfasern wie Flachs, Hanf, Zellulose, oder aber auch Granulate und/oder Perlen aus einem Hartschaumdämmstoff wie EPS, XPS, PIR, PUR, etc. Insbesondere muss das zweite Dämmelement nicht zwingend selbsttragend ausgebildet sein, beispielsweise kann es eine Mineralwolle mit einem sehr geringen oder auch keinem Bindemittelanteil sein wie sogenannte lose Wolle oder Einblasdämmstoffe und damit eine geringe Brandlast aufweisen. Durch Aufnahme des zweiten Dämmelements in dem Rahmenelement können vorteilhaft sehr spezielle Anforderungen an die Dämmung erfüllt werden, die nicht mit jedem Dämmmaterial erfüllbar sind, insbesondere in Bezug auf die physikalischen Eigenschaften der Dämmung.

Gegenüber dem herkömmlichen WDVS ist ein Vorteil des vorgefertigten Fassadenelements, dass es einen Verbinder aufweist, so dass dessen Dämmschicht nicht an die Bestandsfassade geklebt oder verdübelt wird. Somit ist eine leichte Rückbaubarkeit ermöglicht, da der Verbau mittels bevorzugt formschlüssig ausgeführter Verbinder es ermöglicht, das vorgefertigte Fassadenelement nach Montage leicht wieder zu demontieren. Die leichte Demontage ermöglicht schließlich ein Recycling der eingesetzten Fassadenelemente, Halbzeuge und Rohstoffe.

Als Bestandsfassade wird im Rahmen der Erfindung eine bestehende Wand eines Gebäudes bezeichnet. Die Wand ist bevorzugt eine Außenwand des Gebäudes, was aber nicht zwingend ist. Insbesondere umfasst der Begriff Bestandsfassade eine mittels einer Oberflächenbekleidung ästhetisch gestaltete Außenwand, dies ist aber nicht zwingend für die vorliegende Erfindung.

Die Erfindung kann dabei auf jede Art von Bestandsfassaden angewendet werden, sowohl auf einschalige als auch zweischalige Außenwände, beispielsweise aus Beton, Porenbeton oder Stahlbeton oder Mauersteinen wie Ziegelsteinen oder Kalksandsteinen. Die Bestandsfassade ist dabei bevorzugt massiv monolithischer Bauart, um die Verankerung der Verbinder aufzunehmen.

Insbesondere kann die Bestandsfassade eine Außenfassade eines Gebäudes bis zur Gebäudeklasse 3 entsprechend der deutschen Musterbauordnung sein, welche geringen Brandschutzauflagen unterliegen.

Die erste Anbindungsschicht bildet die Anbindung an die Bestandsfassade mit oder ohne eine Bestands-Oberflächenbekleidung, je nachdem ob die Bestands-Oberflächenbekleidung ggf. im Rahmen der Sanierung z. b. aus statischen Gründen oder aus Gründen des Umweltschutzes entfernt wird. Mit "Anbindung" wird im Rahmen der vorliegenden Offenbarung allgemein die geometrische Nebeneinanderpositionierung bezeichnet, welche letzten Endes durch die Verbinder festgelegt wird.

Die erste Anbindungsschicht ist beispielsweise zwischen 50 und 140 mm dick, bevorzugt zwischen 80 und 120 mm. Die Dicke der ersten Anbindungsschicht wird dabei im Wesentlichen von der Dicke des ersten Dämmelements bestimmt. Die Dicke des ersten Dämmelements ergibt sich im Zusammenspiel mit der Dicke der zweiten Dämmschicht bzw. des zweiten Dämmelements aus den Anforderungen an die energetische Sanierung. Insbesondere bei einer zu geringen dickenmäßigen Auslegung würde die Wärmeeffizienz nicht erreicht werden, so dass die Standards für die energetische Sanierung nicht einzuhalten wären.

Die zweite Anbindungsschicht bildet die Unterschicht für die Außenschicht des sanierten Gebäudes bzw. der sanierten Bestandsfassade und bietet hierbei bevorzugt eine möglichst vielseitige Anbindung an gewünschte Oberflächenbekleidungen. Zweckmäßig wird die zweite Anbindungsschicht so gewählt, dass eine Anbindung an eine Vielzahl von Materialien chemisch und physikalisch möglich ist, die die neue Oberflächenbekleidung der Bestandsfassade bilden, insbesondere Putz, Holz, Mörtel, Klinker, Glas, Fliesen oder dergleichen.

In einer bevorzugten Ausgestaltung weist das Fassadenelement bereits bei Baustellenanlieferung die Oberflächenbekleidung auf, d.h. diese wird bereits bei der Vorfertigung auf die zweite Anbindungsschicht aufgebracht. Als Materialien kommen insbesondere Putz, Holz, Mörtel, Klinker, Glas oder Fliesen in Betracht. Möglich sind sowohl mineralischer Putz als auch pastöser Edelputz. Aufgrund der geringeren Anfälligkeit gegen Transportschäden sind pastöse Edelputze bevorzugt. Vorteilhaft ist damit die Oberflächengestaltung bereits vorfertigungsseitig erfolgt, so dass dieser sonst übliche Schritt entfallen kann, und auch hierfür kein Gerüst benötigt wird.

Die Dämmschicht umfasst zumindest ein zweites Dämmelement, das in einem insbesondere aus einem Metall- oder Holzprodukt gefertigten umlaufenden Rahmenelement aufgenommen ist. Das Rahmenelement kann einstückig gefertigt sein oder beispielsweise aus einzelnen aneinandergefügten Streben. Das Rahmenelement weist bevorzugt eine beispielsweise quadratische oder rechteckige Ansicht auf, sodass es mit weiteren Rahmenelementen zusammen so angeordnet werden kann, dass eine beliebig große Fassadenfläche lückenlos bedeckt werden kann.

Die einzelnen Rahmenstreben sind aufgrund von fertigungstechnischen Vorteilen bevorzugt rechteckigen Querschnitts, können aber auch quadratisch, vielkantig oder gar rund sein. Es kann vorgesehen sein, dass einige oder alle Rahmenstreben im Querschnitt Konturenformen aufweisen können, die zu Konturenformen anderer Rahmenstreben komplementär ausgebildet sind, insbesondere um beispielsweise einen Formschluss auszubilden. Insbesondere bevorzugt sind sogenannte Nut-Feder-Verbindungen in der Horizontalfuge zweier Fassadenelemente. Beispielsweise können obere Rahmenstreben Nuten aufweisen, die mit Federn oder Spundungen unterer Rahmenstreben in Eingriff gehen können oder umgekehrt.

Alternativ oder zusätzlich hierzu kann vorgesehen sein, dass einige oder alle Rahmenelemente randseitige Aussparungen zur Aufnahme von Streifen der im Folgenden beschriebenen zweiten Feststoffplatte aufweisen. In die Aussparungen sind Streifen der zweiten Feststoffplatte hinterlegt. Dies hat den Vorteil, dass trotz der Fuge die Brandschutzeigenschaften des Fassadenelements gleich gut sind wie bei einem Fassadenelement, welches nur eine Feststoffplatte umfasst.

Die Abmessung des Rahmenelements, d.h. dessen Höhe und Breite und damit die Länge und Breite des Fassadenelements ist in weiten Bereichen variabel. Große Abmessungen sind dabei besonders vorteilhaft, da hierdurch für eine gegebene Dimension der Bestandsfassade die Anzahl der Arbeitsschritte auf der Baustelle verringert werden kann. Auch wird die gesamte Fugenlänge zwischen den verbauten Fassadenelementen wird bei Verwendung von Fassadenelementen mit großen Abmessungen geringer, was ebenfalls weniger Arbeit auf der Baustelle bedeutet. Die Abmessungen werden in der Praxis an die Fertigungsgegebenheiten und/oder an die beim Transport mittels LKW, Bahn oder anderen Verkehrsmitteln zulässigen Transportabmessungen angepasst.

Die Breite kann beispielsweise bis zu 20 m betragen, beispielsweise von 5 m bis 20 m, oder bis 15 m, beispielsweise von 5 m bis 15 m, oder bis 10 m, z. B. von 5 m bis 10 m oder von 7 m bis 10 m.

Die Höhe kann beispielsweise bis 10 m betragen, beispielsweise von 2 m bis 10 m, oder bis 5 m, beispielsweise von 2 m bis 5 m, oder bis 4 m oder bis zu 3 m.

Alternativ kann die Höhe und/oder die Breite durch eine vorgegebene Palettengröße beispielsweise nach DIN EN 13698-1/ 2009-10 auch das Einfache oder Mehrfache von 1200 mm oder 800 mm betragen oder entsprechend an die Größe von Standardpaletten nach ISO Standard 6780 angepasst sein.

Zur Erhöhung der Stabilität kann der Rahmen bei größeren Abmessungen, ab einer Höhe und/oder Breite von etwa 2 m, 2,5 m oder 3 m, mit vertikal verlaufenden Streben, insbesondere Holzstreben versteift werden. Die Anzahl der Streben sowie die Abstände sind dabei bevorzugt an die Abmessungen der im Folgenden beschriebenen ersten Feststoffplatten angepasst, beispielsweise im üblichen Rastermaß von 1,25 m, und die ersten Feststoffplatten auf Stoß auf den Versteifungsstreben gesetzt. Alternativ oder zusätzlich hierzu sind die Anzahl der Streben sowie die Abstände angepasst an die Tragfähigkeit der Bestandsfassade, an das Eigengewicht der Fassadenelemente, die zu erwartenden Windlasten, und/oder an die Abmessungen der Schwellen und Ständer der Holzrahmenbauelemente.

Die Dämmschicht ist bevorzugt von 100 bis 200 mm dick, bevorzugt von 120 bis 180 mm, insbesondere bevorzugt von 130 bis 150 mm, besonders bevorzugt von in etwa 140 mm. Die Dicke der gesamten Dämmschicht in Summe wird dabei im Wesentlichen von der Dicke des zweiten Dämmelements bestimmt. Die Dicke des zweiten Dämmelements ergibt sich im Zusammenspiel mit der Dicke des ersten Dämmelements aus den Anforderungen an die energetische Sanierung. Insbesondere bei einer zu geringen dickenmäßigen Auslegung würde die Wärmeeffizienz nicht erreicht werden, so dass die Standards für die energetische Sanierung nicht einzuhalten wären.

Die Dicke der Rahmenelemente liegt zweckmäßig in der Größenordnung des zweiten Dämmelements, d. h. von 100 bis 200 mm, bevorzugt von 120 bis 180 mm, insbesondere bevorzugt von 130 bis 150 mm, besonders bevorzugt von in etwa 140 mm.

Das Fassadenelement weist bevorzugt eine Ansicht auf, die es erlaubt, dass es mit weiteren Fassadenelementen zusammen so angeordnet werden kann, dass eine beliebig große Fläche lückenlos bedeckt werden kann, bevorzugt etwa eine quadratische oder rechteckige Ansicht. Bevorzugt ist das Fassadenelement im Wesentlichen quaderförmig, abgesehen beispielsweise von Spundungen oder dergleichen.

Es kann vorgesehen sein, dass beispielsweise zwischen dem ersten Dämmelement und der Bestandsfassade weitere Schichten mit bauphysikalischer Funktion vorhanden sind, beispielsweise eine Armierungsschicht oder eine Schicht, welche den pH-Wert zwischen der Mineralwolleschicht und der Außenschicht der Bestandsfassade, beispielsweise Putz oder Mörtel, ausgleicht. Auch können im Fassadenelement weitere Schichten mit thermischer Funktion vorhanden sein, um beispielsweise die Lage des Taupunktes zu beeinflussen, oder dampfsperrende oder dampfbremsende Schichten, die eine Austrocknung der Dämmschicht begünstigen.

Das erste Dämmelement bildet typischerweise einen Teil der Außenseite oder die gesamte Außenseite des Fassadenelements. Das Fassadenelement steht an der Seite, welche der Bestandsfassade zugewandt ist, dabei bevorzugt in direkten Kontakt mit der Bestandsfassade. Dabei ist vorteilhaft vorgesehen, dass das erste Dämmelement bevorzugt elastische Eigenschaften derart aufweist, dass es geeignet ist, Unebenheiten der Bestandsfassade zu nivellieren. Damit wird eine Hinterströmung des Elements mit Kaltluft durch Luftspalte zwischen dem ersten Dämmelement und der Bestandsfassade vermieden, was sich positiv auf die Dämmwirkung auswirkt. Für den Fall, dass weitere Schichten zwischen dem ersten Dämmelement und der Bestandsfassade vorgesehen sein sollten, können diese ebenfalls elastische Eigenschaften aufweisen, so dass der Effekt der Vermeidung von Luftspalten oder Lufteinschlüssen zwischen der ersten Anbindungsschicht und der Bestandsfassade weiterhin besteht.

In einer bevorzugten Ausführungsform der Erfindung bildet der erste Verbinder zumindest einen Teil der ersten Außenseite des Fassadenelements. Somit ist der Verbinder vorgesehen, in direkten Kontakt mit der Bestandsfassade, bzw. mit einem an der Bestandsfassade angebrachten Gegenstück, im Folgenden als zweiter Verbinder bezeichnet, zu treten, um an der Bestandsfassade befestigt zu werden. Bevorzugt wird die Außenseite des Fassadenelements gemeinsam durch den oder die ersten Verbinder und das erste Dämmelement gebildet.

Es kann vorgesehen sein, pro Fassadenelement lediglich einen einzigen ersten Verbinder zu verwenden, beispielsweise eine sich horizontal länglich erstreckende Leiste mit einer hinterschnittenen Schulter. Alternativ können mehrere, insbesondere zwei erste Verbinder, beispielsweise hakenähnliche erste Verbinder vorgesehen sein, die bevorzugt in zwei nebeneinander gelegenen Ecken des Fassadenelements angeordnet sind.

Es ist hierbei bevorzugt, dass der erste Verbinder Mittel zur Einstellung seiner Länge aufweist. Damit kann vorteilhaft der erste Verbinder an Unebenheiten der Bestandsfassade angepasst werden.

Bei einer bevorzugten Ausführungsform der Erfindung ist vorgesehen, dass das Fassadenelement zumindest eine erste Feststoffplatte umfasst, welche zwischen der ersten Anbindungsschicht und der Dämmschicht angeordnet ist. Neben der Eigenschaft, dass die Feststoffplatte dazu eingerichtet ist, die Dämmschicht, insbesondere das in der Dämmschicht befindliche zweite Dämmelement, weiter zu verkapseln, bietet diese bauliche Maßnahme die Möglichkeit, weitere Funktionsträger auf der ersten Feststoffplatte vorzusehen. Die erste Feststoffplatte stellt eine stabile Stütze für Rohre, Leitungen, Kabel oder dergleichen dar, insbesondere beispielsweise für Wärmeleitungen, Wasserleitungen, Luftkanäle usw.

Die erste Feststoffplatte ist beispielsweise eine OSB-Platte (englisch: *oriented strand board*), und besteht bevorzugt aus Grobspanwerkstoffen. Die mechanischen Eigenschaften der OSB-Platte können beispielsweise entsprechend OSB/1, OSB/2, OSB/3 oder OSB/4 ausgebildet sein entsprechend der Norm DIN EN300 /2006-09. Insbesondere bevorzugt ist hier eine OSB/3-Platte verwendet. Bei größeren Fassadenelementen können mehrere erste Feststoffplatten z. B. in genormter Größe eingesetzt werden, um das Rahmenelement zu überdecken. Alternativ zu einer OSB-Platte kann eine Gipsplatte, insbesondere beispielsweise Gipsfaserplatte verwendet werden.

Die erste Feststoffplatte weist eine Dicke von 5 bis 30 mm, bevorzugt 10 bis 20 mm, besonders bevorzugt in etwa 15 mm, auf. Eine weitere Verdickung der ersten Feststoffplatte würde zu einem hohen Gewicht des Fassadenelements führen. Eine Verdünnung würde dazu führen, dass die daran angebrachten Gegenstände, insbesondere etwa der Holzrahmen und/oder die ersten Verbinder, nicht ausreichend gut zu sichern wären. Zweckmäßig ist daher eine Dicke gewählt, welche eine ausreichende Abreißfestigkeit für Nägel und/oder Metallklammern bieten kann.

Die Verbindung der ersten Feststoffplatte mit der Dämmschicht kann beispielsweise durch Klebung, Verschraubung, Vernagelung, Klammerung usw. erfolgen, wobei die Befestigung bevorzugt an dem Rahmenelement erfolgt. Eine kostengünstige Methode ist die Vernagelung unter Verwendung eines Holzrahmenelements.

Gemäß einer bevorzugten Ausführungsform weist das Fassadenelement zumindest einen Lüftungsschacht auf. Gemäß einer weiter bevorzugten Ausführungsform ist an der ersten Feststoffplatte zumindest ein Lüftungsschacht befestigt. Der Begriff Lüftungsschacht umfasst hierbei jegliche Art von Kanälen, welche geeignet sind, um Umgebungsluft durch das Fassadenelement zu leiten, beispielsweise in Form von Rohren, aber auch Kanäle anderen Querschnitts, insbesondere quadratischen oder rechteckigen Querschnitts. Vorteilhaft bietet die vorgeschlagene Konstruktion einen sicheren und stabilen Einbau von Lüftungsschächten innerhalb des Fassadenelements. Der Lüftungsschacht verläuft bevorzugt vertikal im verbauten Fassadenelement. Der Lüftungsschacht kann Abzweigungen aufweisen, insbesondere einen oder mehrere Querschächte um die Anbindung z. B. an Fenster- oder Laibungsrahmen zu ermöglichen. Ein Querschacht kann insbesondere einen rohrförmigen, quadratischen, rechteckigen oder auch einen längsgestreckten Querschnitt mit schlitzartiger Austrittsöffnung aufweisen.

Es kann vorgesehen sein, dass der Lüftungsschacht dabei auf der Seite der Dämmschicht, d.h. auf der der Bestandsfassade abgewandten Seite, angeordnet ist, da dann vorteilhaft mit geringer Geräuschentwicklung innerhalb des durch die Bestandsfassade begrenzten Gebäudes zu rechnen ist aufgrund zusätzlicher Schallisolation durch die Feststoffplatte. Zu Geräuschentwicklung kann es beispielsweise aufgrund von Strömungseffekten im Lüftungsschacht (Luftzuggeräusche) kommen.

Bevorzugt ist vorgesehen, dass der Lüftungsschacht an der der ersten Anbindungsschicht zugewandten Seite der Feststoffplatte angeordnet ist. Ein Vorteil, den Lüftungskanal auf der gebäudezugewandten Seite zu positionieren, besteht darin, dass keine zusätzliche Durchführung des Lüftungsschachts durch das Rahmenelement nötig ist.

Ein weiterer Vorteil der Ausführungsform des Fassadenelements mit Lüftungskanälen besteht beispielsweise darin, dass ein Fassadenelement bereitgestellt wird, welches eine energetische Sanierung bis zu einem Passivhausstandard ermöglicht. Beim Passivhaus wird die Zuluft und Abluft aus dem Inneren des Gebäudes ans Äußere getragen, und zwar mittels Lüftungsschächten, welche durch die Fassade des Hauses verlaufen. Die Lüftungsanlage vermindert darüber hinaus auch den Wärmeverlust. Da der wohnhygienisch notwendige Luftwechsel ausschließlich über einen mittels Wärmetauscher vorgewärmten Luftstrom durch die Lüftungsanlage erzeugt werden kann, ist eine freie unkontrollierte Fensterlüftung kaum mehr nötig. Das reduziert erheblich Lüftungswärmeverluste, sorgt für Komfort und spart damit Heizkosten ein. Entsprechende Lüftungsschächte können durch das vorgefertigte Fassadenelement bereitgestellt werden.

Auch die Dämmschichten sind vorteilhaft so ausgelegt, dass sie Passivhaus-Niveau erreichen können. Entsprechend diesen soll über die Wärmedämmung insbesondere der Wände eine überdurchschnittliche Wärmerückgewinnung erreicht werden. Insbesondere kann ein U-Wert des Fassadenelements größer oder gleich 0,15 W/(m²K) sein, wobei U einen Wärmedurchgangskoeffizient in W/(m²·K) entsprechend EN ISO 6946 /2018-03 definiert.

Bei einer bevorzugten Ausführungsform ist vorgesehen, dass das Rahmenelement aus einem Metall- oder Holzprodukt gefertigt ist. Metallprodukte bieten den Vorteil der Festigkeit und Stabilität, während Holzprodukte oftmals leichter sind. Als Holzprodukt wird im Rahmen der vorliegenden Erfindung sowohl Naturholz bezeichnet, aber auch Sperrholz, Holzwerkstoffe oder dergleichen. Alternativ können an dieser Stelle aber auch kostengünstige Kunststoffrahmen verwendet werden.

Gemäß einer weiteren bevorzugten Ausführungsform umfasst die zweite Anbindungsschicht zumindest eine zweite Feststoffplatte, die an der Dämmschicht anliegt. Vorteilhaft wird durch die Verbau der zweiten Feststoffplatte das Dämmelement vollständig durch feste Konstruktionen eingeschlossen, nämlich hauptflächenseitig durch die erste und die zweite Feststoffplatte sowie seitenflächig durch das Rahmenelement. Hierdurch ist eine große Auswahl an Dämmelementen möglich, da insbesondere eine inhärente mechanische Stabilität, d.h. Eigensteifigkeit der eingesetzten Dämmelemente nicht erforderlich ist.

Es können materialidentische erste und zweite Feststoffplatten verwendet werden oder Feststoffplatten unterschiedlichen Materials. Besonders bevorzugt wird eine zementgebundene zweite Feststoffplatte eingesetzt. Derartige Platten zeichnen sich durch eine hohe Druck- und Biegezugfestigkeit aus. Ein weiterer Vorteil einer zementgebundenen Platte sind die guten Brandschutzeigenschaften. Die zementgebundene Platte kann eine Bewehrung aus Glasfasern aufweisen, die weiter bevorzugt aus alkaliresistenten Glasfasern gebildet wird, sodass hierdurch bereits ein steifer äußerer Abschluss des Fassadenelements bereitgestellt werden kann, der direkt als Putzträger verwendbar ist. Alternativ kann auch eine Gipsplatte, insbesondere vliesarmierte Gipsplatte vorgesehen sein.

Bei größeren Fassadenelementen können mehrere zweite Feststoffplatten z. B. in genormter Größe eingesetzt werden, um das Rahmenelement zu überdecken. Beispielsweise können Feststoffplatten 1250 mm x 1000 mm, 1250 mm x 2600 mm oder 1250 mm x 3000 mm groß sein. Die Fugen zwischen den zweiten Feststoffplatten können in an sich bekannter Weise mit Putzschienen versehen und der Stoß mit einem Kompriband luftdicht abgedichtet sein.

Werden mehrere zweite Feststoffplatten in einem Fassadenelement eingesetzt, dann sind an der Fuge die zweiten Feststoffplatten bevorzugt von einem Streifen der zweiten Feststoffplatte hinterlegt. Dies hat den Vorteil, dass trotz der Fuge die Brandschutzeigenschaften des Fassadenelements gleich gut sind wie bei einem Fassadenelement, welches nur eine Feststoffplatte umfasst. Zweckmäßig weisen hierzu einige oder alle Rahmenelemente Aussparungen zur Aufnahme der Streifen der zweiten Feststoffplatte auf.

Auch am Rand des Rahmenelements, d. h. hier am Fassadenelementstoß kann ein Streifen der zweiten Feststoffplatte hinterlegt sein. Am Rand des Fassadenelements kann weiterhin auf einer Seite ein Überstand und auf der gegenüberliegenden Seite ein Rückstand der zweiten Feststoffplatten vorgesehen sein, welche formkomplementär zueinander ausgebildet sind. Der Überstand und der Rückstand sind jeweils etwa halb so groß wie die Breite des hinterlegten Streifens der zweiten Feststoffplatte.

Ein hinterlegter Streifen kann beispielsweise von 10 mm bis 10 cm breit sein, bevorzugt von 10 mm bis 80 mm, besonders bevorzugt von 20 mm bis 40 mm, insbesondere bevorzugt von 30 mm.

Die zweite Feststoffplatte weist eine bevorzugte Dicke von 5 bis 30 mm, besonders bevorzugt von 10 bis 20 mm, insbesondere bevorzugt von 15 mm auf. Auch hier sind die Anforderungen an die Dicke insbesondere durch die mechanische Stabilität und durch gleichzeitige Vorgaben durch das zu erreichende geringe Gewicht des Fassadenelements bestimmt. Die zweite Feststoffplatte ist bevorzugt an dem Rahmenelement befestigbar.

In einer bevorzugten Ausführungsform umfasst die zweite Anbindungsschicht eine Grundierung, die bevorzugt zumindest einen Teil der zweiten, von der Bestandsfassade abgewandten Außenseite des Fassadenelements bildet. Die Grundierung kann insbesondere auf der zementgebundenen Platte aufgebracht sein.

Als Grundierung wird im Rahmen der vorliegenden Erfindung eine Schicht verstanden, welche insbesondere ausreichende Haftbedingungen für eine aufzutragende Oberflächenbekleidung bereitstellt. Als Grundierung wird bevorzugt eine universal einsetzbare Basis für eine abschließende aufzubringende Oberflächenbekleidung gewählt, die sich für alle gängigen Oberflächenbekleidungen eignet, insbesondere Mörtel, Holz, Putz, Glas, Fliesen oder Klinker. Als Grundierung kann aber auch zum Beispiel ein sogenannter Vorspritzer eingesetzt werden, d. h. eine Schicht dünn aufgetragenen Mörtels, beispielsweise ein Sand mit einer Korngröße bis 4 mm, bis 6 mm oder bis 8 mm und Bindemittel. Als Bindemittel eignet sich beispielsweise Zement, ggf. mit Zusätzen aus Natur- oder Kunstharzanteilen.

In einer bevorzugten Ausführungsform umfasst die zweite Anbindungsschicht eine Armierung oder Bewehrung. Die Armierung kann insbesondere auf der zementgebundenen Platte aufgebracht sein. Die Armierung kann außerdem das Trägermaterial, d. h. eine Matrix für die Grundierung bilden. Als Armierung werden ein in einem Armierungsmörtel eingebettetes Verstärkungsvlies oder ein Glasfasergewebe bevorzugt. Die Armierung verringert insbesondere eine Rissbildung im Putz. Vorteile der Armierung sind außerdem die Bereitstellung von Schlagfestigkeit, Duktilität und Druckfestigkeit an das Fassadenelement. Die Außenseite des Fassadenelements kann also entsprechend widerstandsfähig ausgestaltet werden.

Die Dämmelemente, welche in der ersten Anbindungsschicht und in der Dämmschicht vorgesehen sind, können gleichen oder unterschiedlichen Materials sein.

In einer bevorzugten Ausführungsform sind das erste und/oder das zweite Dämmelement aus einer Mineralwolle gefertigt, die eine Wärmeleitfähigkeit mindestens entsprechend der Wärmeleitfähigkeitsgruppe 035 nach DIN 4108-4 / 2017 erfüllt bei einem Bindemittelanteil von weniger als 5 Gew.-%, bevorzugt von weniger als 4 Gew.-%, weiter bevorzugt von weniger als 3 Gew.-%, insbesondere bevorzugt von weniger als 2 Gew.-%, besonders bevorzugt von weniger als 1 Gew.-% oder sogar bei Bindemittelfreiheit. Vorteilhaft ist der Brandlasteintrag vergleichsweise gering bei gleichzeitig guter Wärmedämmung.

Die dem Fachmann bekannten Bindemittel können eingesetzt werden. Insbesondere werden bevorzugt organische Bindemittel eingesetzt, wie etwa Phenol-Formaldehydharz oder Phenol-Formaldehyd-Harnstoffharze, was sich positiv auf den Faserverbund auswirkt, da diese Bindemittel eine gute Affinität zu den Fasern aufweisen und gute Durchnetzung des Gebildes ermöglichen. Alternativ können auch auf vorzugsweise erneuerbaren Rohstoffen basierende formaldehydfreie Bindemittel zum Einsatz kommen.

Bevorzugt wird als erstes und/oder zweites Dämmelement ein Mineralwolleprodukt aus Glas- oder Steinwolle eingesetzt. Insbesondere können Dämmmaterialien verwendet werden, die durch ein Alkali/Erdalkali-Massenverhältnis von kleiner 1 gekennzeichnet sind und eine Faserstruktur, die durch einen mittleren geometrischen Faserdurchmesser kleiner 4 µm bestimmt ist. Insbesondere kann Mineralwolle mit einer Zusammensetzung entsprechend EP 1 522 532 A1 oder WO 2005/035894 A1 eingesetzt werden.

Zweckmäßigerweise liegt die Rohdichte des ersten Dämmelements im Bereich von 15 bis 40 kg/m³, bevorzugt von 15 bis 25 kg/m³, womit eine hinreichende Elastizität der ersten Ausgleichschicht bzw. des Dämmelements bereitgestellt wird. Die Rohdichte des zweiten Dämmelements ist über einen weiten Bereich variabel. Sie liegt aufgrund der geringen mechanischen Anforderungen an das zweite Dämmelement und dessen Optimierung auf die Dämmung im Bereich von 10 bis 80 kg/m³, bevorzugt von 15 bis 40 kg/m³, besonders bevorzugt von 15 bis 25 kg/m³.

Es ist bevorzugt, dass die ersten und/oder zweiten Dämmelemente aus laminarer Mineralwolle gebildet sind, so dass die Fasern im Wesentlichen parallel zu der ersten bzw. der zweiten Feststoffplatte ausgerichtet sind.

Die von den Fassadenelementen aufgenommenen Kräfte, insbesondere Windsogkräfte und Eigengewicht werden über das Rahmenelement in Verbindung mit den Feststoffplatten über die Verbinder an die Bestandsfassade abgeleitet. Zwar kann durch ein mit der ersten und der zweiten Feststoffplatte kraftschlüssig verbundenes, etwa verklebtes zweites Dämmelement mit geeigneten Abreißfestigkeiten der Lastabtrag verbessert werden, jedoch wirkt sich in der Regel die damit einhergehende erforderliche höhere Rohdichte nachteilig auf die Dämmwirkung der Dämmschicht aus.

Die Verbindung der ersten und/oder der zweiten Feststoffplatte mit dem Rahmenelement kann durch mechanische Elemente, d.h. Verschraubung, Nagelung, Klammerung usw. oder durch Verklebung erfolgen. Bevorzugt sind mechanische Befestigungsverfahren.

Nach einer Ausführungsform umfasst das Fassadenelement ein Abschlusselement und/oder ein Laibungselement aus dem Material des Rahmenelements, welches das erste Dämmelement zumindest teilweise umgibt. Die Fassadenelemente können durch die Vorfertigung mit entsprechenden Durchbrüchen für Fenster, Türen, etc. ausgerüstet sein. Die Durchbrüche können mit einem Laibungselement in der Dämmschicht festgelegt werden, welches an den mit korrespondieren Durchbrüchen versehenen Feststoffplatten befestigt sein kann. Alternativ oder zusätzlich hierzu kann das Fassadenelement auch das Fenster selbst umfassen mit Fensterglas, Fensterrahmen und Fensterzarge, bzw. eine Türzarge, welche in der Werkhalle vormontiert werden. Hierdurch werden eine hohe Einbauqualität und Dichtheit des Fensters bzw. Tür gewährleistet. Die innenseitige Auskleidung zwischen der Öffnung der Bestandsfassade und dem Durchbruch in der ersten Feststoffplatte erfolgt nach dem Anbringen der Fassadenelemente vor Ort.

Alternativ hierzu oder zusätzlich hierzu können die Fassadenelemente mit Abschlusselementen ausgerüstet sein, welche an den Außenrändern der Bestandsfassade angeordnet werden.

Alternativ zu der Anbringung der erfindungsgemäßen Fassadenelemente an einer Bestandsfassade können diese auch im Neubau bei Rahmenkonstruktionen wie im Holzbau oder im mehrgeschossigen Stahlbeton-Skelettbau eingesetzt werden. Die Verbinder werden hierzu an geeigneter Stelle in der Holzrahmenkonstruktion oder in der Betondecke verschraubt, und anschließend großflächig das bzw. die Fassadenelemente eingehängt.

Ein erfindungsgemäßes Verfahren zur Herstellung eines Fassadenelements umfasst die Schritte:
a) Bereitstellen einer ersten Anbindungsschicht mit zumindest einem ersten Dämmelement und mit zumindest einem ersten Verbinder zur Anbindung an eine Bestandsfassade,
b) Bereitstellen einer Dämmschicht, wobei das Bereitstellen der Dämmschicht ein Herstellen eines insbesondere aus einem Metall- oder Holzprodukt gefertigten Rahmenelements umfasst, und ein Füllen des Rahmenelements mit einem zweiten Dämmelement,
c) Bereitstellen einer zweiten Anbindungsschicht und
d) Anordnen der Dämmschicht zwischen der ersten und der zweiten Anbindungsschicht.

In einer bevorzugten Ausführungsform ist das derart hergestellte Fassadenelement eines der zuvor beschriebenen Fassadenelemente. Die Merkmale in Bezug auf das Fassadenelement sollen daher in Bezug auf das Verfahren zur Herstellung des Fassadenelements als offenbart gelten und umgekehrt.

Vorteilhaft wird ein Fassadenelement geschaffen, das einen hohen Vorfertigungsgrad aufweist, um insbesondere einen schnellen Baufortschritt in der Verwendung bei der energetischen Sanierung von Gebäuden zu ermöglichen.

Gemäß einer bevorzugten Ausführungsform wird in einem weiteren Fertigungsschritt das im Schritt b) von dem Rahmenelement umgebene zweite Dämmelement mithilfe zweier Feststoffplatten eingekapselt, bevorzugt durch Verschraubung, Vernagelung oder Verklammerung der ersten und der zweiten Feststoffplatten. Hierdurch ergibt sich eine praktische Handhabbarkeit der Dämmschicht. Alternativ kann die erste/und oder zweite Feststoffplatte auch mit dem Rahmenelement verklebt werden.

Gemäß einer bevorzugten Ausführungsform des Verfahrens wird in einem weiteren Fertigungsschritt der erste Verbinder an der ersten Feststoffplatte befestigt, beispielsweise durch Verschraubung, Vernagelung oder Klammerung. Hierdurch ergibt sich vorteilhaft eine lagestabile Positionierung des ersten Verbinders.

Gemäß einer bevorzugten Ausführungsform wird in einem weiteren Fertigungsschritt das erste Dämmelement an die erste Feststoffplatte angeklebt. Hierdurch ergibt sich ein kompaktes und leicht handhabbares Fassadenelement.

Gemäß einer weiteren bevorzugten Ausführungsform ist vorgesehen, dass bei dem Bereitstellen der zweiten Anbindungsschicht eine Schicht eines Armierungsmörtels mit eingebettetem Verstärkungsvlies auf die äußere Seite einer zweiten Feststoffplatte aufgebracht wird.

Das vorgestellte Verfahren zur Herstellung des Fassadenelements zeichnet sich durch industrialisierte Skalierbarkeit aus und durch eine sehr geringe Anzahl von einzelnen Verarbeitungsschritten, was eine kostengünstige Produktion des Fassadenelements ermöglicht.

Bei einem erfindungsgemäßen Verfahren zur energetischen Sanierung von Gebäuden ist vorgesehen, dass in einem ersten Schritt zumindest ein Fassadenelement mit zumindest einem ersten Verbinder bereitgestellt wird und in einem zweiten Schritt eine Bestandsfassade mit zumindest einem zweiten Verbinder versehen wird und in einem dritten Schritt das bereitgestellte Fassadenelement mittels der ersten und zweiten Verbinder an der Bestandsfassade befestigt wird.

Das Fassadenelement ist dabei eines der zuvor beschriebenen Fassadenelemente bzw. eines der Fassadenelemente, die wie zuvor beschrieben hergestellt wurden. Insbesondere ist es damit möglich, bei der energetischen Sanierung Passivhausstandards einzuhalten. Vorteilhaft wird mit der Erfindung eine Lösung mit einem sehr hohen Vorfertigungsgrad bereitgestellt, welcher einen schnellen Baufortschritt ermöglicht. Darüber hinaus werden die Belästigungen der Bewohner sehr geringgehalten, da die Montage bzw. das Anbringen des Systems an der Baustelle wenig Zeit in Anspruch nehmen. Da zudem auch wenig Arbeitskräfte und kein Gerüst notwendig sind, um das Fassadenelement am Gebäude anzubringen, sind weitere entscheidende Engpässe bei der energetischen Sanierung von Gebäuden beseitigt.

Gemäß einer bevorzugten Ausführungsform wirken die ersten und zweiten Verbinder oder Befestigungselemente durch einen Formschluss oder Kraftschluss miteinander zusammen. Insbesondere bevorzugt ist vorgesehen, dass die ersten und zweiten Verbinder mechanisch ineinandergreifen oder miteinander verklemmbar oder verrastbar sind. Ganz besonders bevorzugt ist ein mechanisches Ineinandergreifen, beispielsweise durch eine kraftschlüssige Schwalbenschwanzverbindung. Dies ermöglicht eine besonders leichte Rückbaubarkeit.

Es ist bevorzugt, dass der erste und/oder der zweite Verbinder Mittel zur Verstellung bzw. Einstellung ihres Abstandes zueinander aufweisen. Damit können vorteilhaft der erste und/oder der zweite Verbinder das Fassadenelement an Unebenheiten der Bestandfassade anpassen.

Alternativ hierzu oder bevorzugt zusätzlich hierzu ist es bevorzugt, dass der erste und/oder der zweite Verbinder Mittel zur Verstellung bzw. Einstellung der Lage des Fassadenelements in Richtung der Höhe und/oder Breite des Fassadenelements aufweisen. Damit können vorteilhaft der erste und/oder der zweite Verbinder die Fugengröße zwischen nebeneinander befestigten Fassadenelementen anpassen, insbesondere um eine einheitliche Fugengröße über die Höhe bzw. Breite der Fassadenelemente zu erreichen, wie auch einen sauberen vertikalen Eckanschluss zweier Elemente zueinander.

In einer besonders bevorzugten Ausführungsform wird durch die beschriebenen Mittel zur Verstellung die Möglichkeit geschaffen, das Fassadenelement dreidimensional zu verschieben und somit exakt sowohl zu anderen Fassadenelementen als auch zur Bestandsfassade auszurichten.

Bei dem Verfahren zur energetischen Sanierung von Gebäuden wird die Bestandsfassade flächendeckend mit derartigen Fassadenelementen bedeckt. Hierzu wird beispielsweise in einem ersten Schritt die Bestandsfassade mit einem Raster von zweiten Verbindern versehen.

Beispielsweise wird zu diesem Zweck die Bestandsfassade zunächst fotografiert oder mittels 3D-Scanner aufgenommen, z. B. mittels Drohnen, und in einem Projektplanungsprogramm, z. B. ein CAD/CAM-Programm projektiert. Ausgehend von der Projektplanung werden die Lagen der zweiten Verbinder an der Bestandsfassade bestimmt und eingezeichnet. Die Montage der zweiten Verbinder kann z. B. mittels eines Krans oder bevorzugt mittels einer Hebebühne erfolgen. Die Herstellung der Fassadenelemente kann durch das zuvor beschriebene serielle Bauen hiervon vorteilhaft entkoppelt erfolgen.

In einem zweiten Schritt werden die Fassadenelemente an der Bestandsfassade befestigt. Das Fassadenelement weist hierzu eine Ansicht auf, bevorzugt etwa eine quadratische oder rechteckige Ansicht, sodass es mit weiteren Fassadenelementen zusammen so angeordnet werden kann, dass im Prinzip eine beliebig große Fläche lückenlos bedeckt werden kann. Die Montage der Fassadenelemente kann z. B. mittels eines Krans oder bevorzugt mittels einer Hebebühne erfolgen.

Für den Fall, dass die Fassadenelemente Lüftungsschächte aufweisen und mehrere Fassadenelemente aneinandergesetzt werden, werden diese an den Stößen miteinander über Flansche, z. B. Rohrmuffen gekoppelt.

Beim Elementstoß der Fassadenelemente ist an der Fuge bevorzugt ein Streifen der zweiten Feststoffplatte, d. h. ein Streifen aus dem Material und in der Dicke der zuvor beschriebenen zweiten Feststoffplatten hinterlegt. Dies hat den Vorteil, dass trotz der Fuge die Brandschutzeigenschaften auch durch die Eigenschaften der zweiten Feststoffplatte bestimmt sind. Zweckmäßig weist das Rahmenelement eine oder mehrere entsprechend groß ausgestaltete Aussparungen zur Aufnahme von des oder der Streifen der zweiten Feststoffplatte auf.

Am Elementstoß kann ein Überstand und/oder ein Rückstand der zweiten Feststoffplatten vorgesehen sein, so dass die zweite Anbindungsschicht nicht bündig mit dem Rahmenelement ausgebildet ist. Beim Aneinanderfügen zweier Fassadenelemente treffen sich die überstehende Feststoffplatte und die zurückstehende Feststoffplatte bevorzugt in etwa in der Mitte des hinterlegten Streifens der zweiten Feststoffplatte.

Die Fugen zwischen den Fassadenelementen können außerdem in an sich bekannter Weise mit Putzschienen versehen und der Stoß mit einem Kompriband luftdicht abgedichtet sein.

Beim Aneinandersetzen der Fassadenelemente kann weiterhin vorgesehen sein, dass diese in einen Formschluss miteinander gebracht werden. Zweckmäßigerweise weisen hierzu einige Rahmenstreben im Querschnitt Konturenformen auf, die zu Konturenformen anderer Rahmenstreben komplementär ausgebildet sind. Beispielsweise können obere Rahmenstreben Nuten aufweisen, die mit Federn oder Spundungen unterer Rahmenstreben in Eingriff gehen können oder umgekehrt.
In einem dritten Schritt des Sanierungsverfahrens werden alte Fenster und ggf. Türen demontiert und durch Fassadenelemente, in welche neue Fenster integriert sind, ersetzt. Zu diesem späten Zeitpunkt ist eine Beeinträchtigung der Anwohner wohl unvermeidlich.

Das erfindungsgemäße Verfahren bietet den Vorteil, dass die gesamte Außenseite des Fassadenelements durch eine spaltfreie Anbindungsschicht bereitgestellt werden kann, welche mit allen gängigen Oberflächenbekleidungen kompatibel ist. Somit kann die Oberflächenbekleidung vorteilhaft in einem einzigen Arbeitsgang großflächig am Gebäude angebracht werden. Hierdurch kann ein harmonischer Eindruck der gesamten Fassade bewirkt werden, zum Beispiel eine originalgetreue Reproduktion der Bestandsfassade, was insbesondere bei einer Außenfassade eines Gebäudes oftmals eine Erhaltungsvorgabe bei der Sanierung darstellt. Alternativ kann das erfindungsgemäße Verfahren vorteilhaft dazu verwendet werden, das Gesicht des Gebäudes vollständig zu verändern: Farbe, Proportion, Material eine moderne Gestaltung zu geben. Dabei kann, muss aber nicht die Oberflächenbekleidung an einzelnen vorgefertigten Fassadenelementen aufgebracht werden.

Für den Fall, dass die Oberflächenbekleidung an den vorgefertigten Fassadenelementen aufgebracht wird, kann vorgesehen sein, die Fassadenelemente zu codieren, beispielsweise mittels eines Matrixcodes wie z. B. ein QR-Code, oder mittels eines RFID-Codes. Hierdurch ist es den auf der Baustelle handelnden Personen möglich, die konkrete Position vom Fassadenelement im Projekt zu erfassen, um dieses an der richtigen Stelle im Projekt einzubauen. Hierdurch sind sehr leicht durchgängige, sich über mehrere Fassadenelemente erstreckende Oberflächenbekleidungsstrukturen realisierbar.

Gemäß einer bevorzugten Ausführungsform liegen bei dem Verfahren zur energetischen Sanierung von Gebäuden bodennahe Fassadenelemente nicht bodenseitig auf., wodurch die bodennahen Elemente von negativen Einflüssen, etwa aufsteigender Feuchtigkeit entkoppelt werden. Der Sockelbereich, z. b. 50 cm oberhalb des Bodens, kann in bekannter Weise mit üblichen zur Sockeldämmung vorgesehenen Dämmelementen, etwa auf Basis von PUR, PIR oder XPS gedämmt werden.

Das Fassadenelement befindet sich bevorzugt in einer Umhüllung, insbesondere in einer Schutzfolie, etwa eine Stretch- oder Schrumpffolie zum Schutz vor Eindringen von Wasser oder Verschmutzung. Zum Schutz der Fassadenelemente erfolgt deren Lagerung bevorzugt vertikal, z. B. entsprechend ihrer Lage im verbauten Zustand.

Ein Bausatz zur energetischen Sanierung von Gebäuden umfasst entsprechend der Maßnahmen der Erfindung zumindest ein Fassadenelement mit zumindest einem ersten Verbinder, wie oben beschrieben, und zumindest einem zweiten Verbinder, der geeignet ist, mit dem ersten Verbinder zur Bereitstellung einer zugfesten Verbindung zusammenzuwirken. Hierbei werden Stahlprofile, insbesondere verzinkte Stahlprofile bevorzugt.

Es kann vorgesehen sein, pro Fassadenelement lediglich einen einzigen Verbinder zu verwenden, beispielsweise eine sich horizontal länglich erstreckende Leiste mit einer hinterschnittenen Schulter. Dieser einzige erste Verbinder kann mit einem zweiten entsprechend komplementär ausgebildeten zweiten Verbinder zu einem Formschluss gebracht werden, so dass diese lösbar aneinander befestigbar sind. Alternativ können mehrere, insbesondere zwei erste und zweite Verbinder verwendet werden.

Dabei sind die Verbinder geeignet, eine zugfeste Verbindung miteinander einzugehen. Hierbei wird die Last des Fassadenelements von der Bestandsfassade aufgenommen. Weiter bevorzugt ist es, die ersten und zweiten Verbinder derart auszulegen, dass sie zur Bereitstellung einer lastübertragenden Verbindung zusammenwirken.

Insbesondere die Verbinder ermöglichen eine sehr leichte Rückbarkeit des Systems, welche weder im Falle klassischer Wärmedämmverbundsysteme noch im Falle vorgehängter hinterlüfteter Fassaden gegeben ist.

Der Bausatz kann inklusive zweiter Verbinder kann dabei in der Umhüllung, insbesondere Schutzfolie, mitverpackt sein, so dass die Fassadenelemente mit der benötigten Anzahl zweiter Verbinder als Module auf die Baustelle transportiert werden, was logistische Vorteile hat. Alternativ werden die zweiten Verbinder separat zu den bevorzugt quaderförmigen Fassadenelementen ausgeliefert.

Der Bausatz kann Haken oder Anker umfassen, welche eine Manipulation durch Baustellenkräne ermöglichen. Die Haken oder Anker können sich gemeinsam mit dem Fassadenelement in der Umhüllung, insbesondere Schutzfolie befinden.

### AUSFÜHRUNGSFORMEN DER ERFINDUNG

Weitere bevorzugte Ausführungsformen der Erfindung werden im Nachfolgenden mit Bezug auf die Figuren beschrieben. Es zeigen
Fig. 1 einen Längsschnitt durch ein Fassadenelement nach einer Ausführungsform der Erfindung, das an einer Bestandsfassade befestigt ist,
Fig. 2 einen Längsschnitt durch Fassadenelemente nach weiteren Ausführungsformen der Erfindung, welche an einer Bestandsfassade befestigt sind bzw. werden,
Fig. 3 einen Querschnitt durch Fassadenelemente nach weiteren Ausführungsformen der Erfindung, welche an einer Bestandsfassade befestigt sind,
Fig. 4 einen Querschnitt durch ein Fassadenelement nach einer weiteren Ausführungsform der Erfindung, das an einer Bestandsfassade befestigt ist und
Fig. 5 eine Seitenansicht auf einen Anschlussbereich zweier erfindungsgemäßer Fassadenelemente.

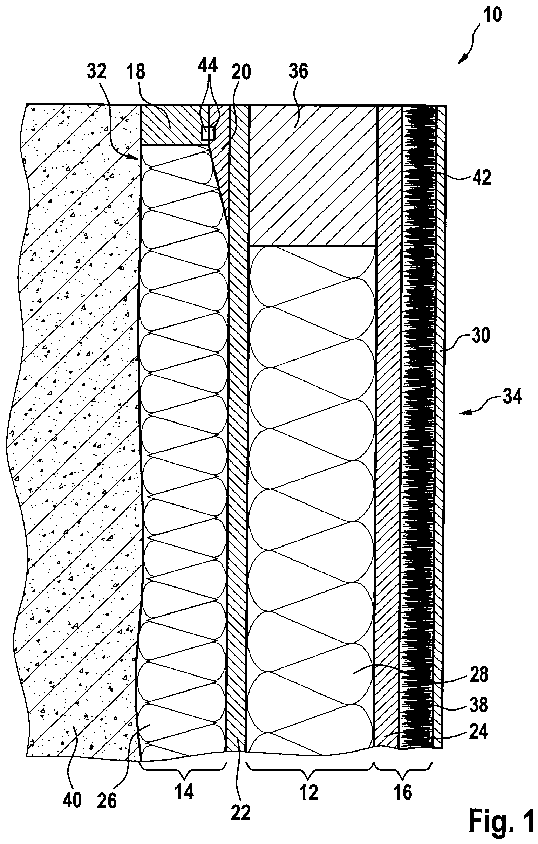

Das Fassadenelement 10 nach Figur 1 umfasst eine Dämmschicht 12, eine erste Anbindungsschicht 14 und eine zweite Anbindungsschicht 16. Das Fassadenelement 10 ist mittels eines ersten Verbinders oder Befestigungselements 18 an der Bestandsfassade 40 befestigt, an welcher zu diesem Zweck ein zweiter Verbinder oder Befestigungselement 20 befestigt ist. Die ersten und zweiten Verbinder 18, 20 wirken derart zusammen, dass das Fassadenelement 10 an der Bestandsfassade 40 aufgehängt werden kann. Die ersten und zweiten Verbinder 18, 20 umfassen weiterhin Mittel 44 zu Verstellung, die ein dreidimensionales Ausrichten zueinander ermöglichen, und hierdurch ein dreidimensionales Ausrichten des Fassadenelements 10 an der Bestandsfassade 40.

Die erste Anbindungsschicht 14 umfasst den ersten Verbinder 18 und ein erstes Dämmelement 26.

Eine erste Außenseite 32 wird durch das erste Dämmelement 26 und den ersten Verbinder 18 der ersten Anbindungsschicht 14 gebildet. Die erste Außenseite 32 ist zur Anlage an die Bestandsfassade 40 optimiert, da die erste Außenseite 32 großflächig durch das erste Dämmelement 26 mit elastischen Eigenschaften gebildet ist, um die Unebenheiten der Bestandsfassade 40 nivellieren.

Der erste Verbinder 18 erstreckt sich über die gesamte Dicke der ersten Anbindungsschicht, das heißt auch über die gesamte Dicke des ersten Dämmelements 26 von einer ersten Feststoffplatte 22 bis hin zur Bestandsfassade 40. Der erste Verbinder 18 ist weiterhin an der ersten Feststoffplatte 22 befestigt, beispielsweise durch Verschraubung, Vernagelung oder Verklammerung.

Die Dämmschicht 12 umfasst ein Rahmenelement 36 und ein zweites Dämmelement 28. Das Rahmenelement 36 und das zweite Dämmelement 28 sind dabei in etwa gleich dick ausgebildet. Die dargestellte Einzelstrebe des Rahmenelements 36 weist hier beispielhaft einen quadratischen Querschnitt auf.

Das zweite Dämmelement 28 wird durch das Rahmenelement 36, die erste Feststoffplatte 22 und eine zweite Feststoffplatte 24 verkapselt. Durch die Verkapselung des zweiten Dämmelements 28 kann eine breite Auswahl an Dämmprodukten für das zweite Dämmelement 28 getroffen werden. In der dargestellten Ausführungsform werden als erstes und als zweites Dämmelement 26, 28 Mineralwollen eingesetzt, beispielsweise Glaswolle, Steinwolle oder die unter dem Markennamen bekannte Ultimate®-Mineralwolle mit einer Zusammensetzung entsprechend der WO 2005/035894 A1.

An der zweiten Feststoffplatte 24 ist die zweite Anbindungsschicht 16 befestigt, welche im dargestellten Ausführungsbeispiel eine Armierung 38 umfasst, sowie eine Grundierung 42. Die Armierung 38 kann beispielsweise ein in einen Armierungsmörtel eingebettetes Glasfaservlies sein, die Grundierung 42 beispielsweise ein Mörtel.

Die Grundierung 42 der Anbindungsschicht 16 bildet eine zweite Außenseite 34 des Fassadenelements 10. Die zweite Außenseite 34 ist bevorzugt universal eingerichtet zur Aufnahme beliebiger Oberflächenbekleidungen 30, insbesondere beispielsweise Putz, Glas, Klinker oder Fliesen.

An der ersten Feststoffplatte 22 kann sowohl auf der der Bestandsfassade 40 zugewandten Seite als auch auf der der Bestandsfassade abgewandten Seite ein Lüftungskanal befestigt sein, welcher in der Figur nicht dargestellt ist.

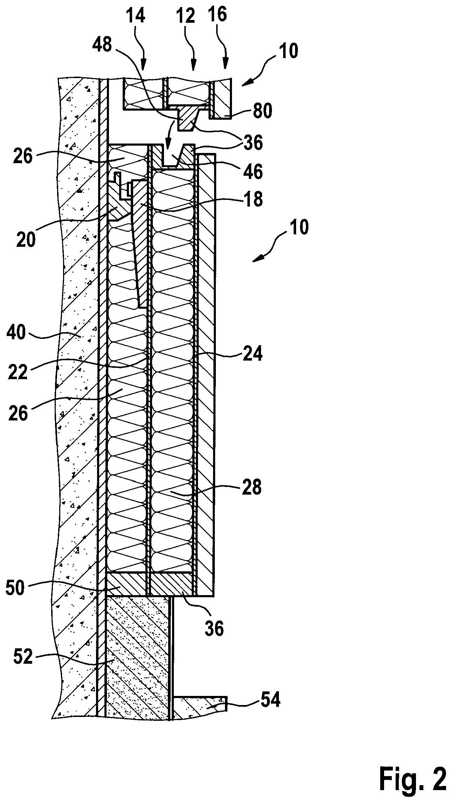

Figur 2 zeigt einen Längsschnitt durch ein erstes Fassadenelement 10 nach einer Ausführungsform der Erfindung, das mittels erster und zweiter Verbinder 18, 20 an einer Bestandsfassade 40 befestigt ist.

Im oberen Bereich der Figur 2 ist ein weiteres erfindungsgemäßes Fassadenelement 10 dargestellt, welches oberhalb des ersten Fassadenelements 10 an der Bestandsfassade 40 angeordnet wird.

Die Rahmenelemente 36 der beiden Fassadenelemente 10 sind ausgebildet, um einen Formschluss miteinander einzugehen. Eine obere Rahmenstrebe des unteren Fassadenelements 10 ist hierzu mit einer Nut 46 versehen, welche komplementär zu einer Spundung 48 der unteren Rahmenstrebe des oberhalb angeordneten Fassadenelements 10 ausgebildet ist.

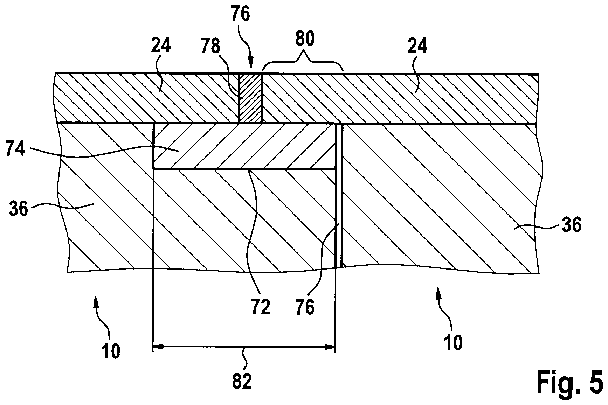

Des Weiteren weisen auch die zweite Anbindungsschicht 16 des oberen Fassadenelements 10, dabei insbesondere auch die zweite Feststoffplatte 24, einen Überstand 80 und die zweite Anbindungsschicht 16 des unteren Fassadenelements 10 einen Rückstand 82 auf, um Brandschutzeigenschaften insbesondere im Stoßbereich der Fassadenelemente 10 zu verbessern. Hierzu siehe auch Figur 5.

Das untere, an der Bestandsfassade 40 bereits befestigte Fassadenelement 10 hat unterseitig ein Rahmenelement 36 ohne Spundung 48, da hier ein unterseitiger Abschluss vorgesehen ist. Unterhalb des Fassadenelements 10 ist entsprechen eine Sockeldämmung 52 vorgesehen, die den Bereich bis zum Untergrund 54 überbrückt.

Insbesondere zur statischen Abstützung der untersten Fassadenelemente 10 der Bestandsfassade 40 können Konsolen (nicht dargestellt), z. B. Metallträger, an der Bestandsfassade 40 montiert werden. Beispielsweise können einem Fassadenelement 10 Konsolen unterseitig angeordnet sein, um dessen Vertikallast aufzunehmen. Die Konsolen weisen entsprechende Aufstellflächen für das Fassadenelement 10 auf.

Zwischen der Sockeldämmung 52 und dem ersten Dämmelement 26 ist ein Abschluss element 50 vorgesehen, welches aus demselben Material wie das Rahmenelement 36 gefertigt ist. Das Abschlusselement 50 ist ebenfalls ein Teil des vorgefertigten Fassadenelements 10 und wird nicht erst an der Baustelle gesondert angebracht.

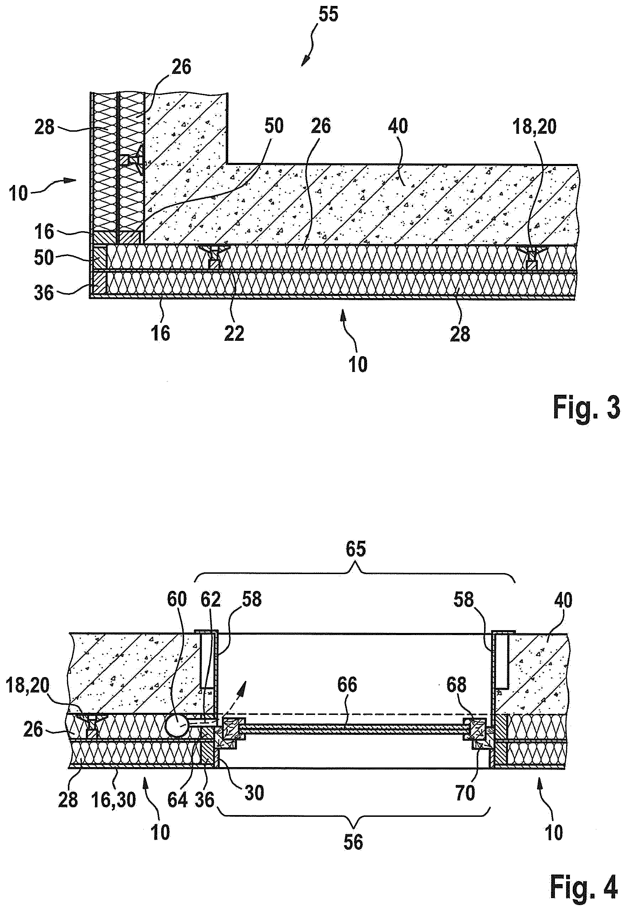

Figur 3 zeigt einen Querschnitt durch zwei erfindungsgemäße Fassadenelemente 10, welche an einer Bestandsfassade 40 befestigt sind. Die Bestandsfassade 40 umfasst an dieser Stelle einen Eckbereich 55.

Ein erstes Fassadenelement 10 steht über den Eckbereich 55 mit der Dämmschicht 12 und den ersten und zweiten Anbindungsschichten 14, 16 hinaus und wird an die zweite Anbindungsschicht 16 des zweiten Fassadenelements 10 bündig angeschlossen. Beide Fassadenelemente 10 sind im Eckbereich 55 mit Abschlusselementen 50 ausgestattet, welche die ersten Dämmelemente 26 umgeben.

Figur 4 zeigt ein Fassadenelement 10 nach einer weiteren Ausführungsform der Erfindung, das an einer Bestandsfassade 40 befestigt ist. Die Bestandsfassade 40 umfasst an dieser Stelle einen Fensterbereich 65.

Das Fassadenelement 10 umfasst dabei das Fenster 56 mit dem Fensterglas 66, dem Fensterrahmen 68 und der Fensterzarge 70, welche in der Werkhalle vormontiert werden. Der wohnraumseitige Anschluss des Fassadenelements 10 erfolgt mittels eines Blendrahmens 58. Die Oberflächenbekleidung 30 kann sich dabei bis zur Fensterzarge 70 erstrecken. Das erste Dämmelement 26 wird im Fensterbereich 65 von einem Laibungselement 64 umgeben, welches beispielsweise aus demselben Material wie das Rahmenelement 36 besteht.

Im Fensterbereich 65 ist außerdem ein integriertes Lüftungskonzept vorgesehen. Das Lüftungskonzept umfasst einen Lüftungsschacht 60, der im dargestellten Ausführungsbeispiel einen runden Querschnitt aufweist. Der Lüftungsschacht 60 befindet sich in der ersten Anbindungsschicht 14 und ist also vom ersten Dämmelement 26 umgeben. Ein Querkanal 62 zum Lüftungsschacht 60 erstreckt sich durch das Laibungselement 64 und gegebenenfalls durch den Blendrahmen 58 zum Wohnrauminneren. Mit einem Pfeil ist in der Figur die Richtung der Zuluft dargestellt.

Figur 5 zeigt eine Seitenansicht auf einen Anschlussbereich zweier erfindungsgemäßer Fassadenelemente 10. Im Anschlussbereich der beiden Fassadenelemente 10 befindet sich eine Fuge 76, welche die Brandschutzeigenschaften der Fassadenelemente 10 maßgeblich mitbestimmt. Die zweiten Feststoffplatten 24 tragen wesentlich zum Brandschutz bei. Die Unterbrechung der zweiten Feststoffplatten 24 im Fugenbereich 76 stellt daher ein Thema bezüglich Brandschutz dar. Bei den Fassadenelementen 10 entsprechend der dargestellten Ausführungsform der Erfindung ist daher vorgesehen, dass im Stoßbereich ein Streifen 74 der zweiten Feststoffplatte 24 in einer entsprechenden Aussparung 72 des Rahmenelements 36 hinterlegt wird. Die Aussparung 72 befindet sich im dargestellten Ausführungsbeispiel an einer Außenseite einer Rahmenstrebe eines Rahmenelements 36. Die zweite Feststoffplatte 24 des links dargestellten Fassadenelements 10 ist an dieser Stelle um die Hälfte einer Breite 82 des Streifens 74 zurückgesetzt. Entsprechend weist die zweite Feststoffplatte 24 des rechts dargestellten Fassadenelements 10 einen Überstand 80 ebenfalls in der Hälfte der Breite 82 des Streifens 74 auf. Somit wird verhindert, dass die Fuge 76 sich gerade vom Stoß der Rahmenelemente 36 bis zum Stoß der zweiten Feststoffplatten 24 erstreckt. Die Fuge 76 zwischen den beiden zweiten Feststoffplatten 24 wird nach Montage der Fassadenelemente 10 über ein Kompriband 78 abgedichtet.

### BEISPIELE

### BEISPIEL 1

Im Beispiel wurde zunächst als Mineralwolle-Dämmelement ein Ultimate®-Holzbaufilz mit einer Dicke von 140 mm in der Wärmeleitfähigkeitsgruppe 035 bereitgestellt.

In einem zweiten Schritt wurde ein rechteckiger Holzrahmen mit einer Dicke von 140 mm und einer Größe von 4 m x 2,50 m hergestellt und einseitig an 4 OSB-Platten einer Dicke von 15 mm befestigt, wobei eine in der Breitenmitte angeordnete Versteifungsstrebe eingesetzt wurde.

Der Ultimate®-Holzbaufilz wurde in das Rahmenplattenhalbzeug eingelegt und mithilfe vier zementgebundener Feststoffplatten, im Ausführungsbeispiel Fermacell Power Panel HD der Dicke 15 mm, durch Kleben an dem Holzrahmen eingeschlossen. Die horizontal verlaufenden Fugen zwischen den zementgebundenen Feststoffplatten wurden mit einer im Bereich der Kreuzungspunkte horizontaler und vertikaler Stöße bzw. Fugen unterbrochenen Putzschiene versehen und der Stoß mit einem Kompriband luftdicht abgedichtet. Die vertikal verlaufenden Fugen wurden mit einer Weite von 5 mm ausgebildet und mit einem Kompriband abgedichtet.

Auf der Seite der OSB-Platte wurden zwei SHERPA EFcon Verbinder Bauteil 1 an den in Bezug auf den Einbauzustand oberen Ecken des Holzrahmens befestigt.

Auf der Seite der SHERPA-Verbinder (erste Anbindungsschicht) wurde eine Glaswolle KP 1-35 mit einer Dicke von 80 mm befestigt. Die mit Glasvlies kaschierte Seite wurde dem Untergrund zugewandt. Die nicht kaschierte Seite wurde mit einem Doppelklebeband auf die OSB - Platte geklebt.

Außenseitig (zweite Anbindungsschicht) wurde ein Glasfasergewebe weber.therm 310 zusammen mit einem Armierungsmörtel weber.therm 307 in einer Dicke von 5 bis 8 mm appliziert.

Darauf wurden als Putzoberflächen weber.prim 403 und weber.pas 481 AB eingesetzt.

Die vorstehend beschriebenen Fassadenelemente wurden an eine Bestandswand mittels an dieser befestigter SHERPA-Verbinder EFcon Bauteil 2 eingehängt und ausgerichtet.

Die benachbarten Fassadenelemente wurden sowohl horizontal als auch vertikal mit einer Fugenbreite von 5mm ausgerichtet. Zur luftdichten Abdichtung wurde wie bei den vertikalen Stößen der Feststoffplatten des Elements ein Kompriband eingesetzt.

### BEISPIEL 2

Wie Beispiel 1, jedoch wurden anstelle der Putzoberfläche Glaselemente eingesetzt, welche mit weber.therm Style 2K verklebt und mit Silikondichtstoff verfugt wurden.

### BEISPIEL 3

Wie Beispiel 1, jedoch wurde anstelle der Putzoberfläche eine Klinkeroberfläche unter Verwendung von Klinkerriemchen erzeugt, welche mit weber.therm 370 verklebt und mit weber.therm 371 verfugt wurden.

Im Vergleich zu einem üblichen Wärmedämmverbundsystem konnte bei allen drei erfindungsgemäßen Beispielen eine signifikante Zeitersparnis bei der Erstellung durch die Verwendung der vorgefertigten Fassadenelemente festgestellt werden. Der Vorgang des Einhängens und Ausrichtens nach erfolgter Anbringung der wandseitigen zweiten Verbinder nimmt sehr wenig Zeit in Anspruch, auch große Flächen können innerhalb weniger Stunden ohne Gerüst unter Verwendung eines Krans und einer mobilen Arbeitsbühne angebracht werden.

Der rechnerische Standsicherheitsnachweis konnte bereits mit zwei Verbindern geführt werden. Bei ungünstigen Bedingungen, etwa durch größere und damit schwerere Fassadenelemente, schwerere Oberflächenverkleidungen oder die Festigkeit der Bestandsfassade können ggf. weitere Verbinder erforderlich sein, die bei größeren Elementen bevorzugt oben an den Berührpunkten der Versteifungsstreben mit dem Rahmen angeordnet werden.

## Patentansprüche

1. Fassadenelement (10) mit zumindest einer Dämmschicht (12), einer ersten Anbindungsschicht (14) und einer zweiten Anbindungsschicht (16),
wobei die erste und die zweite Anbindungsschicht (14, 16) beabstandet voneinander angeordnet sind und die Dämmschicht (12) zwischen der ersten und der zweiten Anbindungsschicht (14, 16) angeordnet ist,
wobei die erste Anbindungsschicht (14) zumindest ein erstes Dämmelement (26) und zumindest einen ersten Verbinder (18) zur Anbindung an eine Bestandsfassade (40) umfasst,
und wobei die Dämmschicht (12) zumindest ein zweites Dämmelement (28) umfasst, das in einem insbesondere aus einem Metall- oder Holzprodukt gefertigten Rahmenelement (36) aufgenommen ist.

2. Fassadenelement (10) gemäß Patentanspruch 1,
**dadurch gekennzeichnet, dass**
das erste Dämmelement (26) und/oder der erste Verbinder (18) zumindest einen Teil einer ersten Außenseite (32) des Fassadenelements (10) bilden, wobei das erste Dämmelement (26) elastische Eigenschaften derart aufweist, dass es geeignet ist, Unebenheiten der Bestandsfassade (40) zu nivellieren.

3. Fassadenelement (10) gemäß einem der vorhergehenden Patentansprüche,
**dadurch gekennzeichnet, dass**
das Fassadenelement (10) zumindest eine erste Feststoffplatte (22) umfasst, welche zwischen der ersten Anbindungsschicht (14) und der Dämmschicht (12) angeordnet ist.

4. Fassadenelement (10) gemäß einem der vorhergehenden Patentansprüche,
**dadurch gekennzeichnet, dass**
das Fassadenelement (10) einen Lüftungsschacht (60) umfasst.

5. Fassadenelement (10) gemäß Anspruch 3 und 4,
**dadurch gekennzeichnet, dass**
der Lüftungsschacht (60) an der ersten Feststoffplatte (22) befestigt ist, und zwar an einer Seite, welche der ersten Anbindungsschicht (14) zugewandt ist.

6. Fassadenelement (10) gemäß einem der vorhergehenden Patentansprüche,
**dadurch gekennzeichnet, dass**
die zweite Anbindungsschicht (16) zumindest eine zweite Feststoffplatte (24) umfasst, die an der Dämmschicht (12) anliegt.

7. Fassadenelement (10) gemäß Anspruch 6,
**dadurch gekennzeichnet, dass**
das Fassadenelement (10) zumindest einen Streifen (74) des Materials der zweiten Feststoffplatte (24) aufweist, welcher in einer Aussparung (72) des Rahmenelements (36) angeordnet ist.

8. Fassadenelement (10) gemäß einem der vorhergehenden Patentansprüche,
**dadurch gekennzeichnet, dass**
die zweite Anbindungsschicht (16) eine Grundierung (42) umfasst, die zumindest einen Teil einer zweiten Außenseite (34) des Fassadenelements (10) bildet.

9. Fassadenelement (10) gemäß einem der vorhergehenden Patentansprüche,
**dadurch gekennzeichnet, dass**
die zweite Anbindungsschicht (16) eine Armierung (38) umfasst, bevorzugt ein in einen Armierungsmörtel eingebettetes Verstärkungsvlies oder ein Glasfasergewebe.

10. Fassadenelement (10) gemäß einem der vorhergehenden Patentansprüche,
**dadurch gekennzeichnet, dass**
das Fassadenelement (10) eine Oberflächenbekleidung (30), insbesondere umfassend Putz, Holz, Mörtel, Klinker, Glas oder Fliesen, aufweist, welche auf der zweiten Anbindungsschicht (16) aufgebracht ist.

11. Fassadenelement (10) gemäß einem der vorhergehenden Patentansprüche,
**dadurch gekennzeichnet, dass**
das Fassadenelement (10) ein Abschlusselement (50) und/oder ein Laibungselement (64), bevorzugt aus dem Material des Rahmenelements (36), aufweist, welches das erste Dämmelement (26) zumindest teilweise umgibt.

12. Verfahren zur Herstellung eines Fassadenelements (10), insbesondere nach einem der vorherigen Ansprüche, mit den Schritten:
a) Bereitstellen einer ersten Anbindungsschicht (14) mit zumindest einem ersten Dämmelement (26) und mit zumindest einem ersten Verbinder (18) zur Anbindung an eine Bestandsfassade (40),
b) Bereitstellen einer Dämmschicht (12) umfassend ein Herstellen eines insbesondere aus einem Metall- oder Holzprodukt gefertigten Rahmenelements (36), und ein Füllen des Rahmenelements (36) mit einem zweiten Dämmelement (28),
c) Bereitstellen einer zweiten Anbindungsschicht (16) und
d) Anordnen der Dämmschicht (12) zwischen der ersten und der zweiten Anbindungsschicht (14, 16).

13. Verfahren zur energetischen Sanierung von Gebäuden, wobei in einem ersten Schritt zumindest ein Fassadenelement (10) mit zumindest einem ersten Verbinder (18) gemäß einem der vorhergehenden Ansprüche 1 bis 11 bereitgestellt wird,
in einem zweiten Schritt eine Bestandsfassade (40) mit zumindest einem zweiten Verbinder (20) versehen wird, und
in einem dritten Schritt das bereitgestellte Fassadenelement (10) mittels der ersten und zweiten Verbinder (18, 20) an der Bestandsfassade (40) befestigt wird.

14. Verfahren nach Anspruch 13,
**dadurch gekennzeichnet, dass**
die ersten und zweiten Verbinder (18, 20) durch einen Formschluss oder Kraftschluss miteinander zusammenwirken, bevorzugt mechanisch ineinandergreifen oder miteinander verklemmt oder verrastet sind und der erste und/oder zweite Verbinder (8, 20) Mittel (44) zur Verstellung umfassen, die ein dreidimensionales Ausrichten des Fassadenelements (10) an der Bestandsfassade (40) ermöglichen.

15. Bausatz zur energetischen Sanierung von Gebäuden umfassend zumindest ein (10) mit zumindest einem ersten Verbinder (18) gemäß einem der vorhergehenden Patentansprüche 1 bis 11 und zumindest einem zweiten Verbinder (20), der geeignet ist, mit dem ersten Verbinder (18) zur Bereitstellung einer zugfesten und/oder lastübertragenden Verbindung zusammenzuwirken.
